# EUROPEAN PATENT APPLICATION

(11) **EP 2 919 414 A1**
(43) Date of publication of application: **16.09.2015**
(21) Application number: 14158531.5
(22) Date of filing: 10.03.2014
(51) Int. Cl.: H04L 9/32

(54) **Method of authenticating a wind turbine controller**

(71) Applicant: Siemens Aktiengesellschaft, 80333 München (DE)
(72) Inventor: Egebjerg, Andreas Groth, 7330 Brande (DK); Hoejgaard, Jannik, 7330 Brande (DK); Thejl, Henrik, 7600 Struer (DK); Thunbo, Flemming Bay, 8464 Galten (DK)

(57) **Abstract**

The invention describes a method of authenticating the identity of a controller (10) of a wind turbine (1), which method comprises the steps of issuing an identity certificate (C_10) to the wind turbine controller (10); sending the identity certificate (C_10) over a secure communication channel (23) to a certificate authority (40) for validation and signing; returning a validated and signed identity certificate (C_10_vs) to the wind turbine controller (10) over the secure communication channel (23). The invention further describes an authentication system (23, 40, C_40) for authenticating the identity of a controller (10) of a wind turbine (1). The invention further describes a wind park (2) comprising a number of wind turbines (1); and an industrial control system (20) for managing the wind turbines (1) of the wind park (2); wherein the industrial control system (20) comprises an authentication system (23, 40, C_40) according to the invention for authenticating the identity of a controller (10) of a wind turbine (1) of the wind park (2).

## Description

The invention describes a method of authenticating the identity of a controller of a wind turbine; an authentication system; and a wind park.

Secure digital communication between computers is essential to prevent eavesdropping, hacker attacks, unauthorized access, etc. In systems such as computer networks, secure data communication is important, particularly if data is vulnerable to attack or unauthorized access. Secure data communication requires confidentiality of data to ensure that a third party cannot eavesdrop and read the data. For this reason, data such as passwords, bank transfer information etc. is usually encrypted before transmission. Secure data communication must also ensure the integrity of the data, i.e. it must be ensured that data cannot be altered between the endpoints, i.e. between sender and recipient. To this end, the sender of a piece of information can "sign" it digitally, and the digital signature informs the recipient that the data has not been manipulated in transit and there have been no unauthorized changes made to the data stream. Most prior art systems based on these security measures comprise devices that are accessible to their users, at least initially. For example, the user of a computer can perform various required identification steps to ensure that data sent from that internet protocol address or IP-address has been sent by that user.

For very secure communication, it is necessary for the recipient of data to be assured of the identity of the sender, so that the recipient can be sure that there has not been a "man in the middle" attack with a third party pretending to be the sender of encrypted and signed data. Likewise, the sender also needs to be sure that it is communicating with the expected recipient. Encryption using a private key of the sender can be used to encrypt a message prior to sending to the recipient, so that the recipient can be sure that the data has in fact been sent by the sender. However, this approach requires the recipient to have the public key of the sender available locally, typically involving physical access to hardware at the recipient side prior to a first exchange of data. The same goes for communication in the opposite direction, thereby making the initial establishment of communication very cumbersome.

Large installations such as wind parks also involve data transfer between computational units, but the "units" of a wind park can be distributed over a very wide area, i.e. the wind turbines may be offshore while an operator base may be at an onshore location. A first exchange of data is generally a commissioning procedure in which a wind park controller makes contact for the first time with wind turbine controllers that are to be commissioned. Therefore, prior to commissioning, physical access to the controller of each wind turbine is necessary. However, physical access to the wind turbines of a remote wind park is generally difficult and expensive and may even be impossible during unfavourable weather conditions, particularly in the case of an offshore windpark.

In order to be able to apply known security concepts to ensure integrity, security and authenticity of the communication between park controller and turbine controller, manual distribution and signing of certificates would be necessary. However, this is expensive and time-consuming. Therefore, since physical access to wind turbines of such a wind park prior to commissioning is generally avoided for reasons of cost, such efforts have not been invested in verifying the identity of the wind turbine controllers prior to a first commissioning. Some approaches rely instead on the security level than can be achieved by deploying "self-signed" certificates, i.e. allowing a wind turbine controller to sign its own identity certificate. However, such an approach still leaves the wind park vulnerable to a later "man in the middle" type of attack. Since malicious attacks on such installations cannot be ruled out, the lack of security is a problem. However, since the overall cost of a wind park is a significant factor, the prohibitive costs of ensuring authenticity using the known approaches also remains a problem.

It is therefore an object of the invention to provide a more secure communication for a wind park.

This object is achieved by the method of claim 1 of authenticating the identity of a controller of a wind turbine; by the authentication system of claim 9; and by the wind park of claim 12.

According to the invention, the method of authenticating the identity of a controller of a wind turbine comprises the steps of issuing an identity certificate to the wind turbine controller; sending the identity certificate over a secure communication channel to a certificate authority for validation and signing; and returning a validated and signed identity certificate to the wind turbine controller over the secure communication channel.

In the context of the present invention, the term "authenticating" is to be understood as ensuring knowledge of the identity of the origin or sender of data such as a certificate. A "identity certificate" is to be understood in the context of the invention as an electronic document that uses a digital signature to bind a public key with an "identity", for example, in the case of a wind turbine, the identity might be the IP address of that wind turbine's controller. In the context of the invention, the wind turbine controller is to be understood as computer hardware built into the wind turbine and used to control various systems of the wind turbine. The certificate is therefore used to verify that a public key irrefutably belongs to an entity such as a wind turbine controller. A secure communication channel in the context of the present invention is to be understood as a communication channel that has been established in a trusted environment and/or is protected by any suitable cryptographic procedure.

As indicated above, the controller of the wind turbine is to be understood as a computer or computing arrangement that is realised to control the components of the wind turbine. The controller may be realised as an industrial computer that will be installed at some stage in the wind turbine. For example, the wind turbine controller can comprise a computer with various interfaces to an external wind park controller as well as to internal components such as the generator, data measurement and collection devices, auxiliary devices such as pitch motors, yaw motor, cooling systems, etc. These interfaces can all be realised using known communication interfaces such as a local area network, wireless networks, etc. Usually, the controller also comprises a terminal arranged at a suitable location (e.g. inside the nacelle) accessible to a technician for performing a local maintenance or service procedure.

An advantage of the authentication method according to the invention is that an additional and vital level of security can be reached for large installations such as a wind park with the access problems described above. While prior art methods may ensure confidentiality of data passed between two end-points, and may also be able to guarantee the integrity of the data, the known methods cannot ensure absolute confidence that the sender of data is in fact who or what it claims to be. Using the method according to the invention, the identity of a wind turbine controller can be assured in a straightforward and very secure manner, so that a user (e.g. the operator of a wind park) can be certain at all times that he is indeed communicating with that wind turbine.

The steps of the method of authenticating the identity of a controller of a wind turbine may be collectively referred to as performing an authentication of the wind turbine controller. This authentication can advantageously be performed at an early stage in the lifetime of the wind turbine, for example prior to a first commissioning of the wind turbine in a wind park. In this way, any hacker attacks or unauthorized access attempts as described above can be avoided in a very secure manner and in a relatively easy way.

According to the invention, the authentication system for authenticating the identity of a controller of a wind turbine comprises a certificate authority realised to issue an identity certificate to the wind turbine controller in an initial identity creation step and to validate and sign that identity certificate in a subsequent identity authentication step; and a secure communication channel for passing the initial identity certificate from the wind turbine controller to the certificate authority and for passing the validated and signed identity certificate from the certificate authority to the wind turbine controller.

One advantage of the authentication system according to the invention is that relatively little effort is required to ensure or authenticate the identity of a wind turbine. Known constructs can be made use of to issue a certificate to a wind turbine and the inventive authentication system can apply these constructs to verify or authenticate any number of wind turbines, even in large installations with the physical access problems described above. For example, the certificate authority may be realised to issue a certificate similar to the type of digital certificate known from digital cryptography techniques. The authentication system according to the invention can be made use of at various stages in the lifetime of a wind turbine and/or a wind park, for example prior to initial commissioning of one or more wind turbines in a wind park; upon reaching an end-of-service stage for a wind turbine and/or a wind park; during a hardware replacement procedure; etc.

According to the invention, the wind park comprises a number of wind turbines and an industrial control system for managing the wind turbines of the wind park, wherein the industrial control system comprises an authentication system according to the invention for authenticating the identity of a controller of a wind turbine of the wind park.

An advantage of the wind park according to the invention is that an operator of the wind park can always be assured that communication between a wind park controller and the wind turbines of the wind park can be carried out in a secure and confidential manner since the identity of the wind turbines is reliably authenticated.

Particularly advantageous embodiments and features of the invention are given by the dependent claims, as revealed in the following description. Features of different claim categories may be combined as appropriate to give further embodiments not described herein.

Therefore, in the following, the terms "wind turbine controller" and "controller" may be used interchangeably to mean the same thing. Furthermore, the terms "wind turbine" and "wind turbine controller" may be abbreviated to "WT" and "WTC" respectively. A wind park controller may also be simply referred to as a park controller.

As indicated above, the authenticity of a WTC is ensured by issuing an identity certificate to the controller, and validating and signing this identity certificate. Preferably, a suitable encryption technique is applied to sign the identity certificate. Therefore, in a particularly preferred embodiment of the invention, the method comprise a step of generating cryptographic keys for a wind turbine controller, e.g. an encryption key pair, whereby the cryptographic key generation step is performed locally in the wind turbine controller. In a particularly preferred embodiment of the invention, the cryptographic keys are generated using a trusted platform module (TPM) such as a cryptoprocessor ("crypto-chip") embedded in the hardware of the controller. Preferably, the authentication system comprises a suitable cryptographic means such a suitable cryptoprocessor chip at the wind turbine controller side as well as at the wind park controller side. In this way, all sensitive data such as certificates for establishing secure communication as well as any other data can be safely encrypted prior to sending over the communication channel and decrypted after being received over the communication channel. The advantage of using such a cryptoprocessor is that the private key cannot be extracted, so that communication is very secure when the data is encrypted using this private key. Of course, a key pair can be generated using software means, for example by applying a suitable algorithm and storing the keys locally (preferably hidden to make stealing more difficult).

To ensure that any certificate issued by the certificate authority can be trusted, the certificate authority must be protected with reliable means so that external parties can rely on its integrity. Protection of a certificate authority can be ensured using established security mechanisms known in the field of information technology (IT). Since the certificate authority is trusted, an entity such as a web browser connecting to the controller will not issue unnecessary warnings to a user or technician involved in the initial setup of the identity certificate for a wind turbine controller. In a wind park according to the invention, the industrial control system comprises a supervisory control and data acquisition (SCADA) system realised to support the usage of certificates, for example the SCADA system of a wind park controller can incorporate the certificate authority that issues identity certificates for any controller of that wind park. Preferably, the method according to the invention includes the step of providing a "root certificate" of the certificate authority to the wind turbine controller. In this way, for example, the public key of a cryptographic key pair for communication between the certificate authority of the SCADA system can be stored in the root certificate. Any wind turbine controller given such a root certificate can therefore trust the certificate authority in a later data transfer step. The method according to the invention allows an external or frontend entity (e.g. a web browser) to securely connect to a wind turbine controller, since the security is ensured by the root certificate previously stored in the frontend entity. In this way, the possibility of a man-in-middle attack can very favourably be ruled out.

During "discovery", a park controller will address a turbine controller (e.g. via its IP-address), retrieve an identifier from the controller (e.g. a production serial number of the generator) and allocate the wind turbine to a certain "position" in the wind park. Alternatively the park controller may already know the position of the wind turbine, and can therefore configure it accordingly. In a prior art arrangement, discovery is the most vulnerable stage, since it is impossible for a park controller to ensure the integrity of data originating from a controller as long as the identity of that controller has not been authenticated. In a particularly preferred embodiment of the invention, the step of issuing the initial identity certificate to the wind turbine controller takes effect at a trusted production site of the wind turbine controller prior to a commissioning procedure. For this reason, the identity certificate in this case may be regarded as a type of "birth certificate" for the wind turbine controller, and ensures a secure initial discovery of that wind turbine controller before it is detected or "discovered" for the first time. In a further preferred embodiment of the invention, the steps of sending the identity certificate to the certificate authority for validation and signing, and returning the validated and signed identity certificate to the wind turbine controller take effect during a site commissioning procedure, for example during an initial discovery of the wind turbines of the wind park. In a preferred embodiment of a wind park according to the invention, the industrial control system comprises an inventory management module for detecting a wind turbine controller. For example, the inventory management module may be given a list of IP-addresses of wind turbines that have been erected at an offshore site. The inventory management module may retrieve these IP-addresses from a database in order to initiate communication with each controller. Once secure communication has initially been established between the wind park controller and a WT controller with a certain IP-address, controller-specific information can be retrieved (e.g. a serial number of the generator; rated production information; date of manufacture; etc.) and entered into a database for later use.

Preferably, the steps of the method are performed in an automated manner so that as little manual intervention as possible is required. Various steps of the method can be carried out using a computer program product when the computer program product is loaded into a memory of a programmable device. For example, the steps carried out by a certificate authority, a security module and an inventory management module can be carried out by suitable algorithms running on one or more programmable devices of a wind park controller.

A preferred embodiment of the method according to the invention comprises the step of allocating a specific wind turbine to a corresponding "position" in a wind park on the basis of wind turbine identity information obtained either from a central inventory repository or from information in the initial identity certificate of the wind turbine itself.

A certificate may be issued for any suitable duration of time. The security of a certificate is based on the low likelihood of a cryptographic key pair being "broken" by a third party. One approach is to try all possible combinations in a "brute force" attack, which requires considerable computational effort and a relatively long time to break the cryptographic keys. Therefore, one way of ensuring a favourably high level of security is to limit the lifetime of a certificate to a relatively short duration, e.g. one year. Once this time is due to elapse, the already established secure communication between certificate authority and controller can be used to issue a new certificate to the controller.

A wind park may be commissioned for a set duration of time. Once this time has elapsed, operation of the wind park may pass from the previous operator to a new operator. Such a hand-over may require renewed configuration of the wind park on the basis of a new certificate authority, different to the one that originally issued the identity certificates for the WT controllers. Therefore, in a preferred embodiment of the invention, the steps of sending the identity certificate to the certificate authority for validation and signing, and returning the validated and signed identity certificate to the wind turbine controller take effect following an end-of-service procedure. To ensure a smooth handover, the previous operator can provide the successor with relevant security information allowing the successor to take over control in a secure manner. This could e.g. be login credentials to allow the successor to manually update the wind turbine certificate, or other information enabling him to validate and sign the certificates using the new certificate authority. In a preferred embodiment, the authentication system is realised to perform an automatic monitoring of a certificate over its lifetime. In this way, an upcoming certificate expiry can automatically be detected, and any relevant steps can be prepared by the authentication system.

The authentication system according to the invention preferably comprises a built-in ability to distribute and process certificates automatically in the different types of scenario described above. Of course, in the event that a communication link between park controller and turbine controller is unavailable for whatever reason, the certificates can be managed using appropriate manual procedures.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 illustrates schematically the steps of an embodiment of the method according to the invention;
Fig. 2 illustrates an "online" commissioning procedure for an embodiment of a wind park according to the invention;
Fig. 3 illustrates an "offline" commissioning procedure for an embodiment of a wind park according to the invention;
Fig. 4 shows a schematic representation of an embodiment of a prior art secure communication arrangement.

In the diagrams, like numbers refer to like objects throughout. Objects in the diagrams are not necessarily drawn to scale.

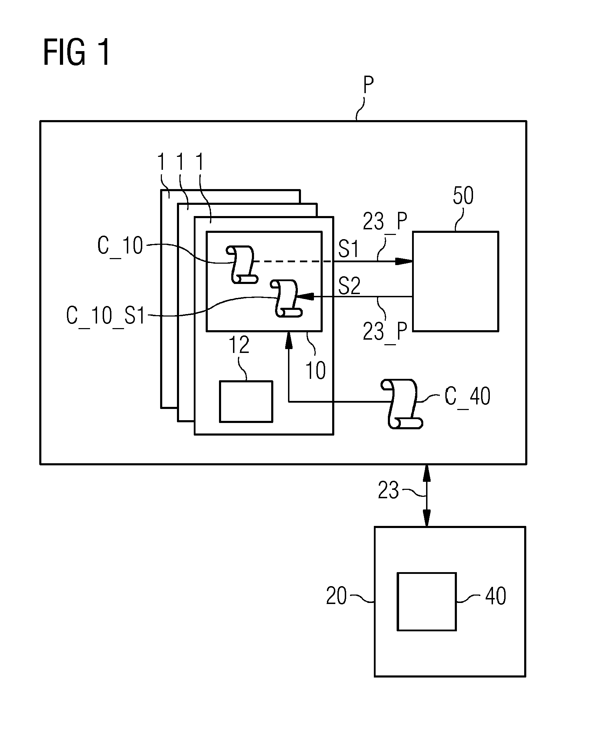

Fig. 1 illustrates schematically the steps in authenticating the identity of a controller 10 of a wind turbine 1 in an embodiment of the method according to the invention, which is performed while the controllers 10 are still at their production facility P. Each wind turbine controller 10 is intended for a wind turbine 1, indicated here as a conceptual block 1.

The diagram shows an authentication system according to an embodiment of the invention, comprising an initial certificate authority 50, a wind park controller 20, and a secure communication channel 23_P between these. The initial certificate authority 50 is part of the production facility P and is therefore trusted. Data transmission between the initial certificate authority 50 and the controllers 10 therefore takes place in a closed and trusted environment, so that the communication channel 23_P may be regarded as secure. Data communication between devices is usually IP-address based, so that the sender identifies itself by its IP address.

Each individual turbine controller 10 generates a private/public key pair, using a suitable cryptographic module 12, and exposes the public key to the certificate authority 50. To this end, in a first secure communication step S1 a wind turbine controller 10 sends an initial certificate C_10, namely a message C_10 containing its public key, to the certificate authority 50. The certificate authority sees the certificate C_10 and associates it with the sender's IP address, i.e. the IP address of the wind turbine 10. The certificate authority 50 then signs the certificate C_10 and returns it as a signed certificate C_10_S1 in a secure communication step S2. The turbine controller 10 now has proof from the initial trusted certificate authority 50 that it is a 'valid' or 'verified' turbine controller 10. This signed certificate C_10_S is the initial identity certificate C_10_S1 of the wind turbine controller 10, so that a wind turbine 1 is equipped with a verified identity before it is shipped from the production facility P.

A wind park controller 20 has the public key certificate C_50 of the trusted initial certificate authority 50 installed, for example in an entity or service such as a web browser. Similarly, the production facility P has the public key certificate C_40 of the park controller's certificate authority 40, and can install this public key certificate C_40 on each turbine controller 10.

Alternatively to having the production facility P certificate authority 50 sign the initial identity certificate C_10_S1, the wind park controller 20 can perform this task using its certificate authority 40. This alternative procedure is also indicated in Fig. 1. It requires a trusted and secure communication channel 23 between the production facility P and the wind park controller 20.

At the production site P, a wind turbine controller 10 could be equipped with a key generation module 12 such as a cryptoprocessor 12 for generating a cryptographic key pair. The advantage of using such a cryptoprocessor is that the private key cannot be extracted, so that communication is very secure when the data is encrypted using this private key.

The overall security can be extended even further. For example, a certificate can be built in to the turbine controller hardware during a hardware manufacture stage, proving that this hardware is valid turbine controller hardware. This option requires the certificate authority 50 to trust the hardware production certificate authority.

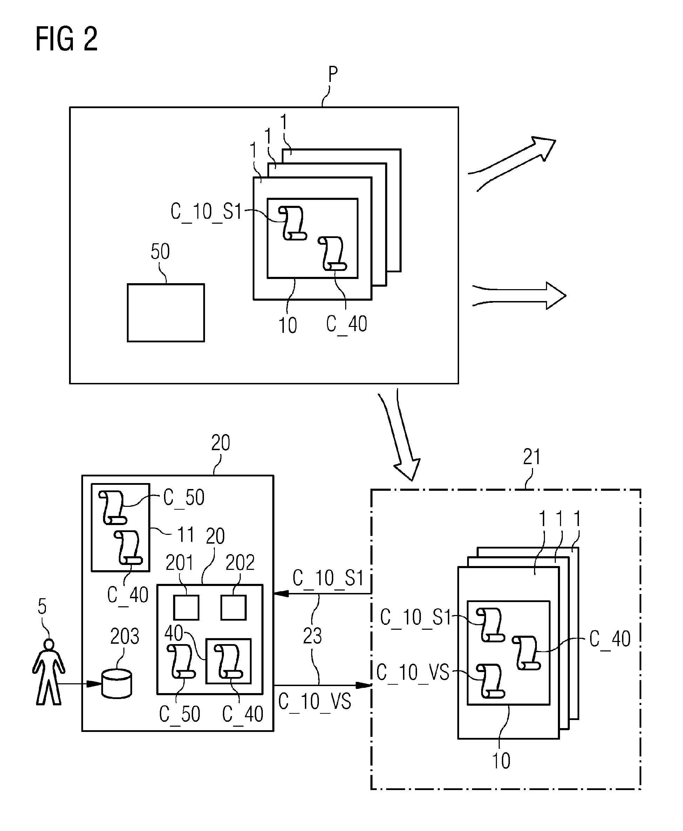

Fig. 2 shows the interrelationships between various elements relevant to a wind park with an authentication system according to the invention, illustrating an "online" commissioning procedure for the wind park. Here, wind turbines 1 are manufactured at a production site P, where each controller 10 of a wind turbine 1 is given a unique certificate C_10_S1 signed by the certificate authority 50 as described above. The unique certificate C_10_S1 can contain relevant information associated with that turbine controller 10, for example the media access control (MAC) address of the wind turbine controller 10.

Wind turbines 1 manufactured at the production facility P are generic, so that any wind turbine 1 can be sent to any site around the world, as indicated by the arrows pointing in various directions. The diagram shows one such site 21 for a wind park. Logically, a wind park comprises a set of wind turbines 1 and a wind park controller 20. Here, the wind park controller 20 is shown as part of a manufacturer's service environment 22, which also comprises a master database 203 with a list of all turbines deployed at various wind parks. To commission the wind park, the inventory is defined by retrieving a list of all turbines to be deployed at that particular wind park, with relevant information (e.g. IP addresses, MAC addresses, turbine name, location in the park etc.) from the master database 203. This information is given to an inventory service 201 or inventory management module 201 of the wind park controller 20. The inventory service 201 detects or 'discovers' a wind turbine 1 of the site 21, and the corresponding certificate C_10_S1 is validated to ensure turbine authenticity. The turbine controller 10 in turn validates the park controller 20 using the C_40 certificate. The park controller 20 and the turbine controller 10 are now mutually authenticated and a secure communication channel 23 is established. Using the information in the inventory module 201 or information in the turbine controller, the unique identity of the turbine controller 10 is established. With this information the turbine controller 10 can now generate a new private/public key pair (potentially applying the unique data). The new public key is exposed to the park controller 20, which will have the certificate authority 40 validate the certificate C_10_S1 for this particular turbine and return a signed and validated certificate C_10_VS to the turbine controller 10. The turbine controller 10 now has proof from the subsequent certificate authority 40 of its unique authenticity. This step is performed for all turbine controllers 10 of the site. When all certificates have been validated and signed, the wind park controller 20 can be sure that communication between it and the wind turbines 1 of the site 21 is secure and safe.

The root certificate C_40 of the certificate authority 40 can be provided to a customer or operator in an operator environment 3, and also to a user interface frontend entity 11 used to connect to the turbine controller 10, for example a web browser 11. The frontend entity 11 also has a certificate C_50 of the production facility's certificate authority 50, as shown in the diagram, indicating trust of the certificate authorities 40, 50. The deployment process illustrated in Fig. 2 can be carried out in a fully automatic manner, since it is not necessary to manually enter information pertaining to the wind turbines 1 of the wind park site 21. Manual input is only required for the master database 203, as indicated by the 'person' symbol.

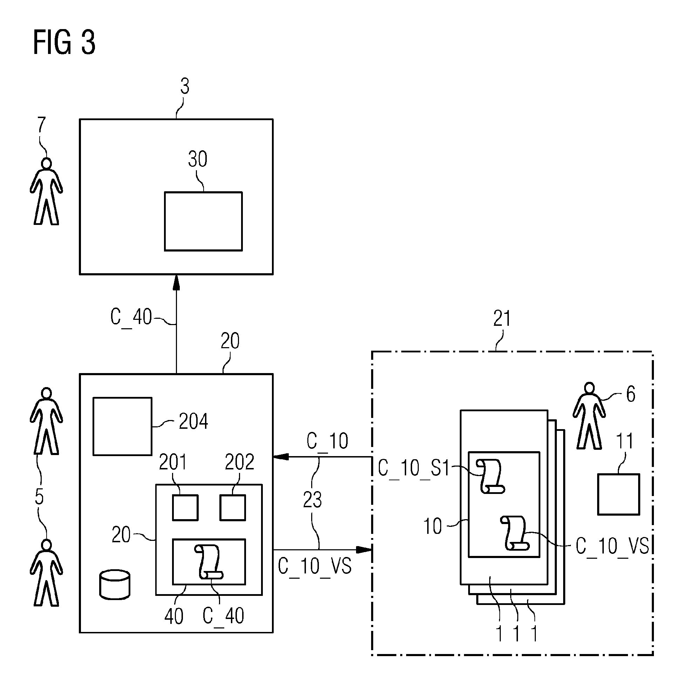

Fig. 3 is similar to Fig. 2, and illustrates an "offline" commissioning procedure for the wind park. Again, to commission the wind park, the inventory is defined in a first step by manually entering the list of wind turbines in the master database 203 of the manufacturer's service environment 22. This information is given to an inventory service 201 of the wind park controller 20. In a second step, a technician 6 has access to a web browser 11 or other entity 11 to communicate with the controller 10 of a wind turbine 1 of the wind park. Presuming that the user interface 11 trusts the certificate authority 50, it can connect to the WTC 10 securely and the technician 6 can instruct the WTC 10 to generate a new key pair with the public key as certificate C_10. The technician 6 sends the certificate C_10 to the manufacturer's service environment 22. In a third step, a user 5 at a frontend of the service environment 22 commands a signing of the certificate C_10, and in a following fourth step, the security service 202 causes the certificate authority 40 to sign the certificate C_10. In a fifth step, the user 5 returns the validated and signed certificate C_10_vs to the wind turbine controller 10. Finally, in a sixth step, the technician 6 on site can configure the validated and signed certificate C_10_vs. The wind turbine 1 has now been manually discovered and commissioned, and is ready for operation.

As mentioned above, a certificate C_10, C_10_vs preferably has a limited lifetime in order to minimize the likelihood of it being 'broken'. In the scenario shown in Figs. 2 and 3, a certificate can be renewed easily. The security service 202 detects an upcoming certificate expiry, and requests the turbine controller 10 to generate a new certificate and to send it to the security service 202, which then requests the certificate authority to validate and sign the certificate. The security service 202 then returns the new validated and signed certificate to the turbine controller 10. Since the turbine controller 10 and the park controller 20 have already set up a secure communication channel as described in the preceding Figures, all steps of such a certificate renewal process are safe, so the continued integrity and security of data communication between turbine controller 10 and park controller 20 is ensured.

At some stage, it may be necessary to replace an entire turbine controller. In such an event, a technician 6 on site 21 replaces the turbine controller 10, makes an initial configuration, and informs the service environment 22 that the replacement has been carried out. A user at the service environment 22 then commands a new discovery procedure of the already known wind turbine 1 to be carried out. If the new WTC 10 has come directly from a production facility P, the online commissioning process described above applies. If the WTC 10 is reused from another deployment it may not be possible for the park controller 20 to authenticate it, and security will be the responsibility of the user who performs the discovery procedure. The security service 202 requests the new turbine controller to generate a certificate. The new turbine controller sends the certificate to the security service 202 in the service environment 22, and the security service 202 causes the certificate authority 40 to sign the certificate, and then returns the validated and signed certificate to the new turbine controller.

An end-of-service situation can be dealt with in a number of ways. In one approach, a user at the service environment 22 can command the site 21 to approach end-of-service. In response, the security service 202 requests each turbine 1 to generate a new certificate and to send it to the security service 202, which then extends the lifetime of each certificate. Subsequently, the security service 202 requests the certificate authority 40 to validate and sign the certificates, which are then returned to the wind turbine controllers 10. In another approach, a user of the service environment 22 can hand over login details to a successor 7 with a new certificate authority 30 in an operator environment 3. The successor 7 can subsequently log into the WTC 10 and, using the offline commissioning scenario described earlier, instruct the successor certificate authority 30 to sign the WTC 10 certificate C_10_vs. In a third approach, the successor can ask the current operator to configure the WTC 10 to trust the successor's certificate authority 30. This will allow the successor's certificate authority 30 to connect to the WTC 10 and update the WTC 10 certificates in an online scenario.

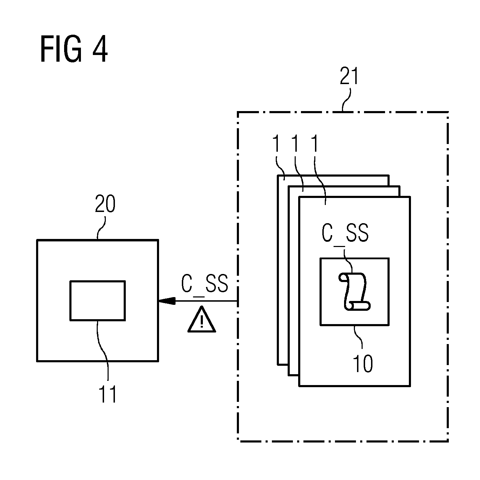

Fig. 4 shows a schematic representation of a known security approach for application to a wind park. Here, a wind turbine controller 10 of a wind turbine 1 issues a self-signed certificate C_SS. This self-signed certificate C_SS has not been issued by a trusted certificate authority. Therefore, when a technician or other user accesses the wind turbine controller 10 using e.g. a web browser 11, the web browser 11 issues a warning to indicate that the validity of the certificate C_SS is questionable, as indicated by the warning sign, since anyone can pretend to be the wind turbine 10 by issuing such a self-signed certificate C_SS. This setup is vulnerable to a man-in-the-middle attack as described above, since it is not possible to ensure a secure communication between a park controller 20 and the wind turbines 1 at the site 21 of a wind park.

Although the present invention has been disclosed in the form of preferred embodiments and variations thereon, it will be understood that numerous additional modifications and variations could be made thereto without departing from the scope of the invention. For example, an existing wind park can be upgraded to use the secure communication described above, since it is possible to install a device or module such as a cryptoprocessor in a turbine controller and park controller and to carry out the steps of issuing, distributing and validating certificates as described above.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A method of authenticating the identity of a controller (10) of a wind turbine (1), which method comprises the steps of
- providing a wind turbine controller (10) with an initial identity certificate (C_10_S1) signed by an initial certificate authority (40, 50);
- sending the initial identity certificate (C_10_S1) over a secure communication channel (23) to a subsequent certificate authority (40) for validation and signing;
- returning a validated and signed identity certificate (C_10_vs) to the wind turbine controller (10) over the secure communication channel (23).

2. A method according to claim 1, wherein the step of providing the initial identity certificate (C_10_S1) to the wind turbine controller (10) takes effect at a production site (P) of the wind turbine controller (10) prior to a commissioning procedure.

3. A method according to claim 1 or claim 2, wherein the steps of sending the initial identity certificate (C_10_S1) to the certificate authority (40) for validation and signing, and returning the validated and signed identity certificate (C_10_vs) to the wind turbine controller (10) take effect during a site commissioning procedure.

4. A method according to claim 1 or claim 2, wherein the steps of sending the initial identity certificate (C_10_S1) to the subsequent certificate authority (40) for validation and signing, and returning the validated and signed identity certificate (C_10_vs) to the wind turbine controller (10) take effect following an end-of-service procedure.

5. A method according to any of the preceding claims, comprising the step of allocating a specific wind turbine (1) to a corresponding position in a wind park site (21) on the basis of wind turbine identity information obtained from the initial identity certificate (C_10_S1).

6. A method according to any of the preceding claims, comprising the step of generating an encryption key pair for a wind turbine controller (10), whereby the key pair generation step is performed locally in the wind turbine controller (10).

7. A method according to any of the preceding claims, comprising the step of providing a root certificate (C_40) of the subsequent certificate authority (40) to the wind turbine controller (10).

8. A method according to claim 6 or claim 7, comprising the steps of
- encrypting the initial identity certificate (C_10_S1) prior to transmission using a private key of the wind turbine controller key pair; and/or
- decrypting a certificate (C_10_vs) received from the certificate authority (40) using a public key of the certificate authority (40).

9. An authentication system (23, 40, 50, C_40) for authenticating the identity of a controller (10) of a wind turbine (1), which system comprises
- an initial certificate authority (40, 50) realised to sign an identity certificate (C_10) of the wind turbine controller (10) in an identity creation step for use as an initial identity certificate (C_10_S1) for a subsequent identity authentication step;
- a subsequent certificate authority (40) realised to validate the initial identity certificate (C_10_S1) and to return a validated identity certificate (C_10_vs) to the wind turbine controller (10); and
- a secure communication channel (23) for passing the initial identity certificate (C_10_S1) from the wind turbine controller (10) to the subsequent certificate authority (40) and for passing the validated and signed identity certificate (C_10_vs) from the subsequent certificate authority (40) to the wind turbine controller (10).

10. An authentication system according to claim 9, wherein the subsequent certificate authority (40) comprises an authority (40) trusted by the wind turbine controller (10).

11. An authentication system according to claim 9 or claim 10, wherein the authentication system comprises an encryption means (12) for encrypting a certificate (C_10, C_10_S1) prior to sending over the secure communication channel (23, 23_P) and for decrypting a certificate (C_10_S1, C_10_vs) received over the secure communication channel (23, 23_P).

12. A wind park comprising
- a number of wind turbines (1) at a wind park site (21); and
- an industrial control system (20) for managing the wind turbines (1);
wherein the industrial control system (20) comprises an authentication system (23, 40, C_40) according to any of claims 9 to 11 for authenticating the identity of a controller (10) of a wind turbine (1) of the wind park.

13. A wind park according to claim 12, wherein the industrial control system (20) comprises a supervisory control and data acquisition system (20) realised to support the usage of certificates (C_10, C_10_S1, C_10_vs, C_40).

14. A wind park according to claim 12 or claim 13, wherein the industrial control system (20) comprises an inventory management module (201) for detecting a wind turbine controller (10) of a wind turbine (1).

15. A computer program product for carrying out steps of the method according to claims 1 to 8 when the computer program product is loaded into a memory of a programmable device (20).
